# EUROPÄISCHE PATENTSCHRIFT

(11) **EP 2 984 397 B1**
(45) Veröffentlichungstag und Bekanntmachung des Hinweises auf die Patenterteilung: **31.05.2017**
(21) Anmeldenummer: 14723679.8
(22) Anmeldetag: 09.04.2014
(51) Int. Cl.: F21S 8/10, F21V 5/00

(54) **LEUCHTEINHEIT FÜR EINEN FAHRZEUGSCHEINWERFER**
LIGHTING UNIT FOR A VEHICLE HEADLAMP
UNITÉ D'ÉCLAIRAGE POUR PROJECTEUR DE VÉHICULE

(30) Priorität: 12.04.2013 AT 502542013
(43) Veröffentlichungstag der Anmeldung: 17.02.2016
(73) Patentinhaber: ZKW Group GmbH, 3250 Wieselburg (AT)
(72) Erfinder: SEYRLEHNER, Christian, A-3341 Ybbsitz (AT); BAUER, Andreas, A-3250 Wieselburg (AT); EICHINGER, Bernd, 3375 Krummnussbaum (AT)
(74) Vertreter: Patentanwaltskanzlei Matschnig & Forsthuber OG
(86) Internationale Anmeldenummer: PCT/AT2014/050087
(87) Internationale Veröffentlichungsnummer: WO 2014/165890

(56) Entgegenhaltungen:
- EP-A1- 2 012 056
- WO-A1-2013/020155
- DE-A1- 10 303 430
- DE-A1-102005 043 992
- DE-A1-102010 056 313

## Beschreibung

Die Erfindung betrifft eine Leuchteinheit für einen Scheinwerfer, insbesondere für einen Scheinwerfer für ein Kraftfahrzeug.

Weiters betrifft die Erfindung einen Scheinwerfer für ein Fahrzeug mit zumindest einer solchen Leuchteinheit.

In der Scheinwerfertechnik besteht häufig der Wunsch, unter Verwendung von nur einer oder mehreren gleichartigen Beleuchtungsvorrichtungen/Leuchteinheiten zwei oder mehrere Lichtfunktionen zu realisieren. Beispielsweise werden häufig Blinklicht-Funktion und die Positionslichtfunktion oder Tagfahrlichtfunktion mittels eines oder mehrerer Leuchteinheiten realisiert, wobei eine Leuchteinheit beide Lichtfunktionen realisiert. Das Licht der beiden Lichtfunktionen tritt dabei über eine gemeinsame Lichtaustrittsfläche aus.

Eine solche Lichtaustrittsfläche weist dabei eine gewisse Größe auf und es ist dann häufig problematisch, eine homogen leuchtende Lichtaustrittsfläche zu realisieren. Solche homogen leuchtenden Flächen sind allerdings häufig auf Grund des besseren optischen Eindrucks gewünscht, bzw. sind diese auch gesetzlich vorgeschrieben.

Es ist eine Aufgabe der Erfindung, eine kompakte Leuchteinheit zur Erzeugung von zwei oder mehr Lichtfunktionen zu schaffen, bei der die oben genannten Probleme behoben sind. Außerdem ist es eine Aufgabe der Erfindung, eine Leuchteinheit zu schaffen, welche den Anforderungen an ein homogenes Erscheinungsbild der einzelnen Lichtfunktionen genügt.

Aus DE 10 2010 056 313 A1 ist eine gattungsgemäße Leuchteinheit für einen Scheinwerfer bekannt. Diese Aufgabe wird mit einer eingangs erwähnten Leuchteinheit durch die Merkmale des Kennzeichens des Anspruchs 1 gelöst.

Die Lichtquellen beider Lichtfunktionen strahlen Licht durch eine gemeinsame Streuoptik (Sekundäroptik), z.B. eine Streuscheibe ab, es wird somit bei beiden Lichtfunktionen eine Fläche mit definierter Form beleuchtet. Beispielsweise weist eine solche Fläche - also die Streuoptik - in einer Ansicht von Vorne eine Kreisform auf. Eine solche definierte Fläche, insbesondere eine Kreisfläche, kann vergleichsweise einfach homogen ausgeleuchtet bzw. beleuchtet/durchstrahlt werden. Durch die Verwendung von jeweils einer Primäroptik in Form eines Optikelementes für jede Lichtquelle kann weiters für jede Lichtfunktion die Streuoptik optimal ausgeleuchtet werden.

Wichtig ist in erster Linie, dass die einzelnen Gruppen an Lichtquellen unabhängig voneinander angesteuert sind, sodass die einzelnen Lichtfunktionen unabhängig voneinander aktiviert bzw. deaktiviert werden können oder alternierend zueinander betrieben werden können (etwa im Fall Blinklicht -Tagfahrlicht).

Unter Umständen kann es weiters auch noch von Vorteil sein, wenn die einzelnen Lichtquellen einer Gruppe getrennt voneinander ansteuerbar sind.

Insbesondere ist es von Vorteil, wenn die Optikelemente als TIR-Linsen ausgebildet sind. TIR-Linsen (TIR = "Total Internal Reflection") sind Linsen mit Totalreflexion. Dieser Linsentyp zeichnet sich durch eine besonders hohe Bündelungseffizienz bei geringer Bautiefe aus.

Derartige TIR-Linsen weisen zwei Bereiche auf, nämlich einen refraktiven Teil (in der Regel das Zentrum der Linse), in dem das Licht durch Brechung gebündelt wird, und einen äußeren reflektiven Teil, in welchem das Licht durch Spiegelung bzw. durch Totalreflexion gebündelt wird.

Insbesondere ist vorgesehen, dass die den Lichtquellen zugeordneten Optikelemente als Licht sammelnde Optiken ausgebildet sind.

Von besonderem Vorteil ist es, wenn die den Lichtquellen zugeordneten Optikelemente in einem gemeinsamen optischen Bauteil (auch als Sammeloptik bezeichnet) ausgebildet sind.

Dieses optische Bauteil hat dementsprechend eine der Anzahl der Optiken entsprechende Anzahl an totalreflektierenden, Licht sammelnden Bereichen. Durch die Integration aller Optikelemente, insbesondere aller TIR-Linsen in einem Bauteil ergibt sich der Vorteil, dass beim Zusammenbau und der Positionierung der Leuchteinheiten nicht eine Anzahl an Optikelementen, sondern lediglich ein einziges Bauteil positioniert und befestigt werden muss.

Weiters ist mit Vorteil vorgesehen, dass die zumindest eine Lichtquelle der ersten Lichtquellen-Gruppe und die zumindest eine Lichtquelle der zweiten Lichtquellen-Gruppe auf einem gemeinsamen Träger angeordnet sind.

Vorzugsweise handelt es sich bei diesem Träger um eine Platine, welche wiederum vorzugsweise auf einem Kühlkörper angeordnet ist.

Günstigerweise ist bei einer konkreten Ausführungsform der Erfindung vorgesehen, dass die zumindest eine Lichtquelle der ersten Lichtquellen-Gruppe und die zumindest eine Lichtquelle auf einer ebenen Fläche des gemeinsamen Trägers angeordnet sind.

Es können dann vorteilhafterweise alle Lichtquellen im Wesentlichen gleichgerichtet angeordnet werden, sodass diese zuverlässig in optimaler Weise durch die gemeinsame Streuscheibe Licht abstrahlen. Es ist vorgesehen, dass die erste Lichtquellen-Gruppe zur Erzeugung einer Blinklicht-Funktion ausgebildet ist.

Weiters ist es vorgesehen, dass die zweite Lichtquellen-Gruppe zur Erzeugung einer Tagfahrlichtfunktion, einer Positionslichtfunktion oder einer kombinierten Tagfahrlichtfunktion-Positionslichtfunktion (Positionslicht ist dabei ein gedimmtes Tagfahrlicht) eingerichtet ist.

Weiters ist bei einer konkreten Ausführungsform, insbesondere im Zusammenhang mit der Erzeugung einer Blinklichtfunktion vorgesehen, dass die erste Lichtquellen-Gruppe zwei oder mehr Lichtquellen umfasst.

Beispielsweise hat es sich dabei als vorteilhaft erwiesen, wenn die erste Lichtquellen-Gruppe genau vier Lichtquellen umfasst.

Weiters ist bei einer konkreten Ausführungsform, insbesondere im Zusammenhang mit der Erzeugung eines Positionslichtes und/oder Tagfahrlichtes mit Vorteil vorgesehen, dass die zweite Lichtquellen-Gruppe genau eine Lichtquelle umfasst.

Um eine optimale Ausleuchtung der Streuscheibe bzw. Streuoptik zu erreichen, ist es von Vorteil, wenn die Lichtquellen der ersten Lichtquellen-Gruppe um die zumindest eine, vorzugsweise genau eine Lichtquelle der zweiten Lichtquellen-Gruppe herum angeordnet sind.

In diesem Sinne ist es auch von Vorteil, wenn die zumindest eine, vorzugsweise genau eine Lichtquelle der zweiten Lichtquellen-Gruppe im Zentrum der zwei oder mehreren Lichtquellen der ersten Lichtquellen-Gruppe angeordnet ist/ sind.

Bei einer konkreten Ausführungsform ist, um eine gleichmäßige Ausleuchtung der Streuoptik zu erreichen, vorgesehen, dass die vier Lichtquellen an den Ecken eines gedachten Rechtecks oder Quadrats angeordnet sind.

Die zumindest eine, bzw. vorzugsweise genau eine Lichtquelle der zweiten Lichtquellen-Gruppe ist in diesem Fall vorzugsweise im Schnittpunkt der Diagonalen des Rechtecks bzw. des Quadrats angeordnet.

Außerdem ist es von besonderem Vorteil, wenn das eine oder die mehreren Optikelemente der ersten Gruppe in Hinblick auf ihr horizontales und/oder vertikales, insbesondere in Hinblick auf ihr horizontales und vertikales Abstrahlverhalten im Zentrum des Optikelementes als Breitstrahler ausgebildet sind. Laut Erfindung sind das eine oder die mehreren Optikelemente der ersten Gruppe in Hinblick auf ihr horizontales und/oder vertikales, insbesondere in Hinblick auf ihr horizontales und vertikales Abstrahlverhalten im Bereich eines Mantels des Optikelementes als kombinierte Breit- und Kreuzstrahler ausgebildet. Weiters ist es von Vorteil, wenn die zwei oder mehr Optikelemente der ersten Gruppe in Hinblick auf ihr Abstrahlverhalten identisch ausgebildet sind.

Systembedingt, durch die Anordnung von in der Regel zwei oder mehreren, insbesondere 4 Lichtquellen und Optikelementen der ersten Gruppe in einem Raster kommt es zu Inhomogenitäten in der Lichtverteilung. Hier hat sich gezeigt, dass durch eine Mischung zwischen Kreuz- und Breitstrahlerprinzip am Linsenmantel eine gute Gleichmäßigkeit in der Lichtverteilung, d.h. lediglich geringe Helligkeitsschwankungen über die Lichtaustrittsfläche der Sekundäroptik (Streuoptik) erreicht werden, und das "Spot"-Verhalten der Lichtquellen, insbesondere in Form von Leuchtdioden, dadurch gedämpft werden kann. Laut Erfindung sind das eine oder die mehreren Optikelemente der zweiten Gruppe in Hinblick auf ihr horizontales Abstrahlverhalten im Bereich eines Mantels des Optikelementes als Kreuzstrahler ausgebildet. Weiters ist vorgesehen, dass das eine oder die mehreren Optikelemente der zweiten Gruppe in Hinblick auf ihr horizontales Abstrahlverhalten im Zentrum des Optikelementes als Breitstrahler ausgebildet sind.

Schließlich ist mit Vorteil noch vorgesehen, dass das eine oder die mehreren Optikelemente der zweiten Gruppe in Hinblick auf ihr vertikales Abstrahlverhalten Lichtstrahlen im Wesentlichen parallel abstrahlen.

Die - in der Regel genau eine - Lichtquelle der zweiten Gruppe liegt vorzugsweise im Zentrum der Lichtquellen der ersten Gruppe, das Licht der ersten Gruppe soll möglichst effizient abgestrahlt werden. Homogenität des abgestrahlten Lichtes hat hier eine untergeordnete Rolle und ist insofern weniger wichtig, als bei der zentralen Anordnung von nur einer Streuoptik pro Tubus (Sekundäroptik) die Leuchtdichte ohnehin gleichmäßig nach Außen abnimmt und keine Inhomogenitäten möglich sind.

Bei einer besonders vorteilhaften Ausführungsform der Erfindung ist vorgesehen, dass die Lichtquellen LED-Lichtquellen sind, wobei jede LED-Lichtquelle zumindest eine Leuchtdiode umfasst.

Es kann dabei vorgesehen sein, dass jede LED-Lichtquelle getrennt ansteuerbar und ein- bzw. ausschaltbar und/ oder dimmbar ist, wobei vorzugsweise jede Leuchtdiode einer LED-Lichtquelle getrennt ansteuerbar und ein- bzw. ausschaltbar und/ oder dimmbar ist.

Vorteilhafterweise ist vorgesehen, dass einzelnen Optikelemente in der Sammeloptik derart zueinander beabstandet sind, dass zwischen den Optikelementen keine Übergangsbereiche für Licht existieren und es somit zu keiner Durchmischung von Licht aus unterschiedlichen Optikelementen kommt.

Aus Designgründen kann es aber auch vorgesehen sein, dass benachbarte Optikelemente in Übergangsbereichen ineinander übergehen. Auf diese Weise emittiert das optische Bauteil nicht nur in den den einzelnen Optikelementen zugeordneten Lichtaustrittsbereichen Licht, sondern auch in den Bereichen zwischen den Optikelementen.

Weiters wird die eingangs genannte Aufgabe mit einem Fahrzeugscheinwerfer, welche eine oder mehrere wie oben beschriebene Leuchteinheiten umfasst, gelöst.

Bei einer konkreten Ausführungsform ist vorgesehen, dass der Fahrzeugscheinwerfer vier solche Leuchteinheiten umfasst.

Vorzugsweise sind die vier Leuchteinheiten an den Ecken eines gedachten Rechteckes oder Quadrates angeordnet.

Weiters ist es von Vorteil, wenn alle Leuchteinheiten einen im Wesentlichen identischen Aufbau aufweisen.

Im Folgenden ist die Erfindung an Hand der Zeichnung näher erläutert. In dieser zeigt
Fig. 1 einen Ausschnitt aus einem Fahrzeugscheinwerfer im Bereich einer erfindungsgemäßen Leuchteinheit,
Fig. 2 die Leuchteinheit aus Figur 1 mit abgenommener Sekundäroptik,
Fig. 3 eine Lichtquellenanordnung einer erfindungsgemäßen Leuchteinheit,
Fig. 4 die Lichtquellenanordnung aus Figur 3 mit vorgesetzten Primäroptiken in einer teilweise transparenten Darstellung,
Fig. 5 einen Horizontalschnitt durch ein Optikelement einer ersten Lichtquellen-Gruppe zur Darstellung des Strahlenverlaufes im Randbereich,
Fig. 6 einen Horizontalschnitt durch ein Optikelement einer ersten Lichtquellen-Gruppe zur Darstellung des Strahlenverlaufes im Zentrum des Optikelementes,
Fig. 7 einen Vertikalschnitt durch ein Optikelement einer ersten Lichtquellen-Gruppe zur Darstellung des Strahlenverlaufes im Randbereich,
Fig. 8 einen Vertikalschnitt durch ein Optikelement einer ersten Lichtquellen-Gruppe zur Darstellung des Strahlenverlaufes im Zentrum des Optikelementes,
Fig. 9 einen Horizontalschnitt durch ein Optikelement einer zweiten Lichtquellen-Gruppe zur Darstellung des Strahlenverlaufes im Randbereich,
Fig. 10 einen Horizontalschnitt durch ein Optikelement einer zweiten Lichtquellen-Gruppe zur Darstellung des Strahlenverlaufes im Zentrum des Optikelementes,
Fig. 11 einen Vertikalschnitt durch ein Optikelement einer zweiten Lichtquellen-Gruppe zur Darstellung des Strahlenverlaufes in vertikaler Richtung,
Fig. 12 zeigt die Vorderseite des optischen Bauteils,
Fig. 13 zeigt einen Schnitt entlang der Linie A-A in Figur 12.
Fig. 14 zeigt einen Schnitt entlang der Linie B-B in Figur 12, und
Fig. 15 eine Rückansicht des Optikelementes aus Figur 12.

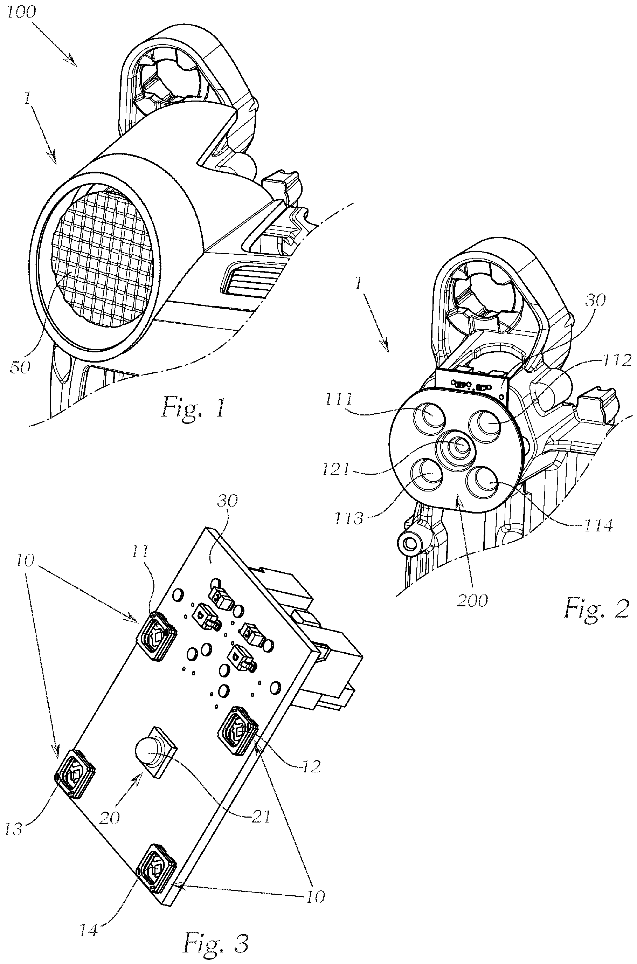

Figur 1 zeigt eine Leuchteinheit 1 eines Fahrzeugscheinwerfers 100. Dabei zeigt Figur 1 lediglich einen Ausschnitt aus dem Fahrzeugscheinwerfer 100, in einem konkreten Beispiel verfügt der Fahrzeugscheinwerfer 100 über vier Leuchteinheiten 1, welche an den Ecken eines gedachten Rechteckes oder Quadrates angeordnet sind.

Eine Leuchteinheit 1 weist - wie in Figur 1 gezeigt - eine Streuscheibe 50 auf, durch welche die dahinter liegenden Lichtquellen, wie im Folgenden beschrieben, Licht abstrahlen. Alle Leuchteinheiten 1 weisen vorzugsweise einen im Wesentlichen identischen Aufbau auf.

Figur 2 zeigt die Leuchteinheit 1 aus Figur 1, nunmehr mit abgenommener Streuscheibe, sodass nunmehr ein optisches Bauteile 200 erkennbar ist. In diesem optischen Bauteil 200 sind eine Anzahl Primäroptiken (Optikelemente) 111, 112, 113, 114, 121 angeordnet bzw. in dem Bauteil 200 ausgebildet.

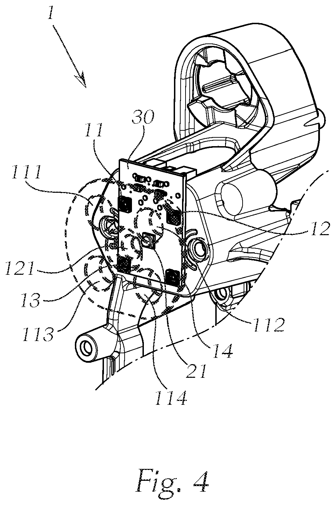

Wie nun aus den Figuren 3 und 4 in Zusammenschau mit Figur 2 zu erkennen ist, umfasst die Leuchteinheit 1 eine erste Lichtquellen-Gruppe 10, welche Gruppe 10 vier Lichtquellen 11, 12, 13, 14 umfasst, sowie eine zweite Lichtquellen-Gruppe 20, welche genau eine Lichtquelle 21 umfasst.

Die Lichtquellen 11, 12, 13, 14, 21 bestehen jeweils aus zumindest einer Leuchtdiode (LED), in der Regel aus genau einer LED.

Die vier Lichtquellen 11, 12, 13, 14 der ersten Gruppe 10 sind an den Ecken eines gedachten Quadrats angeordnet.

Die Lichtquelle 21 der zweiten Lichtquellen-Gruppe 20 befindet sich im Zentrum der vier Lichtquellen 11, 12, 13, 14.

Alle Lichtquellen 11, 12, 13, 14, 21 sind auf einem gemeinsamen Träger 30, beispielsweise auf einem Kühlkörper angebracht, und zwar vorzugsweise auf einer ebenen Fläche des gemeinsamen Trägers 30, sodass alle Lichtquellen Licht im Wesentlichen gleichgerichtet durch die zugeordnete Streuoptik 50 abstrahlen. Konkret sind dabei alle Lichtquellen auf einer gemeinsamen Leiterplatte/Platine 30 (Träger) angeordnet, welche wiederum auf z.B. auf einem Kühlkörper angebracht ist.

Die beiden Gruppen 10, 20 sind getrennt ansteuerbar, sodass zwei Lichtfunktionen - eine erste Lichtfunktion z.B. in Form eines Blinklichtes/Fahrtrichtungsanzeigers mittels der Lichtquellen der ersten Gruppen und eine zweite Lichtfunktion, z.B. ein Tagfahrlicht oder ein Positionslicht mit der Lichtquelle der zweiten Gruppe 20 - unabhängig voneinander ein- und ausgeschaltet werden können, wobei vorzugsweise im Blinklichtbetrieb in dem das Blinklicht und das Tagfahrlicht alternierend ein- und ausgeschaltet werden.

Jede Lichtquelle 11, 12, 13, 14 der ersten Lichtquellen-Gruppe 10 koppelt Licht in ein der jeweiligen Lichtquelle 11, 12, 13, 14 zugeordnetes Optikelement 111, 112, 113, 114 (siehe Figur 2 und 4) ein.

Ebenso koppelt die Lichtquelle 21 der zweiten Lichtquellen-Gruppe 20 Licht in ein ihr eigens zugeordnetes Optikelement 121 ein.

Diese Optikelemente 111, 112, 113, 114, 121 emittieren das Licht auf die gemeinsame Streuoptik 50; bei Aktivierung der Gruppe 1 emittieren dabei die Lichtquellen 11, 12, 13, 14 über die Optikelemente 111, 112, 113, 114 Licht auf die Streuoptik 50, bei Aktivierung der Gruppe 2 emittiert die Lichtquelle 21 über das Optikelement 121 Licht auf die Streuoptik 50.

Die Optikelemente 111, 112, 113, 114, 121 sind licht sammelnde Optiken, welche als TIR-Linsen ausgebildet sind. TIR-Linsen (TIR = "Total Internal Reflektion") sind Linsen mit Totalreflexion. Dieser Linsentyp zeichnet sich durch eine besonders hohe Bündelungseffizienz bei geringer Bautiefe aus.

Derartige TIR-Linsen weisen zwei Bereiche auf, nämlich einen refraktiven Teil (in der Regel das Zentrum der Linse), in dem das Licht durch Brechung gebündelt wird, und einen äußeren reflektiven Teil, in welchem das Licht durch Spiegelung bzw. Totalreflexion gebündelt wird. Die einzelnen Optikelemente werden weiter unten noch näher besprochen.

Die genannten fünf Optikelemente 111, 112, 113, 114, 121 sind in einem gemeinsamen optischen Bauteil 200 ausgebildet sind. Dieses optische Bauteil 200 hat dementsprechend eine der Anzahl der Optikelemente entsprechende Anzahl an totalreflektierenden, Licht sammelnden Bereichen. Durch die Integration aller Optikelemente, insbesondere aller TIR-Linsen in einem Bauteil ergibt sich der Vorteil, dass beim Zusammenbau und der Positionierung der Leuchteinheit nicht eine Anzahl an Optikelementen, sondern lediglich ein einziges Bauteil positioniert und befestigt werden muss.

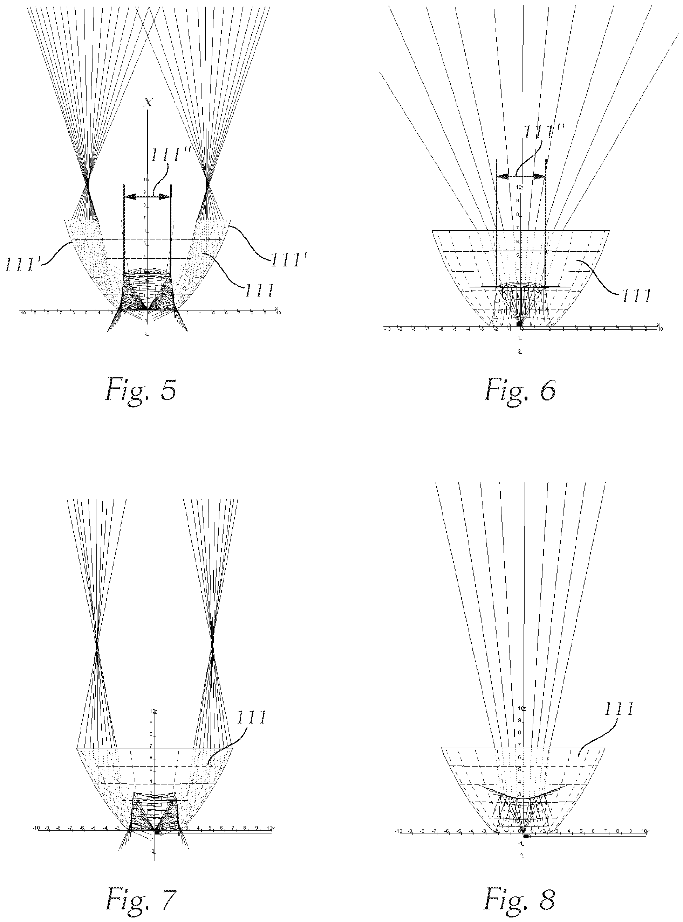

Figur 5 und Figur 6 zeigen jeweils einen Horizontalschnitt durch ein idealisiertes TIR-Optikelemente 111, welches einer Lichtquelle 11 der ersten Gruppe 10 zugeordnet ist. Figur 5 zeigt dabei den Strahlenverlauf im Rand- bzw. Mantelbereich der TIR-Linse 111, während Figur 6 den Strahlenverlauf im Bereich des Zentrums der TIR-Linse 111 zeigt. Der gesamte Strahlenverlauf ergibt sich naturgemäß als Überlagerung dieser Darstellungen, ist der besseren Übersichtlichkeit halber aber nicht zeichnerisch dargestellt.

Wie gut zu erkennen ist, ist das TIR-Optikelement 111 im Bereich seines Mantels 111' als kombinierter Breit- und Kreuzstrahler ausgebildet, während es in seinem Zentrum 111" als Breitstrahler ausgebildet ist.

Der Begriff "Kreuzstrahler" bedeutet dabei, dass Lichtstrahlen aus einer als Kreuzstrahler ausgebildeten Linse oder aus einem als Kreuzstrahler ausgebildeten Linsenbereich zu der optischen Achse X der Linse hin gebrochen werden, diese also kreuzen.

Der Begriff "Breitstrahler" bedeutet dabei, dass Lichtstrahlen aus einer als Breitstrahler ausgebildeten Linse oder aus einem als Breitstrahler ausgebildeten Linsenbereich von der optischen Achse X der Linse weg gebrochen werden, diese also nicht kreuzen.

Der innere, an den refraktiven Bereich 111" anschließende Mantelbereich 111' in Figur 5 ist als Breitstrahler ausgebildet, während in einem äußeren Mantelbereich 111' die Linse als Kreuzstrahler ausgebildet, der Mantelbereich 111' somit als kombinierter Breit- und Kreuzstrahler ausgebildet ist.

In vertikaler Richtung ist das Abstrahlverhalten der TIR-Linse 111 ähnlich, wie dies dem vertikalen Schnitt durch die Linse 111, dargestellt in den Figuren 7 und 8 zu entnehmen ist.

Die Optikelemente 111, 112, 113, 114 der ersten Gruppe 10 sind in Hinblick auf ihr Abstrahlverhalten identisch ausgebildet.

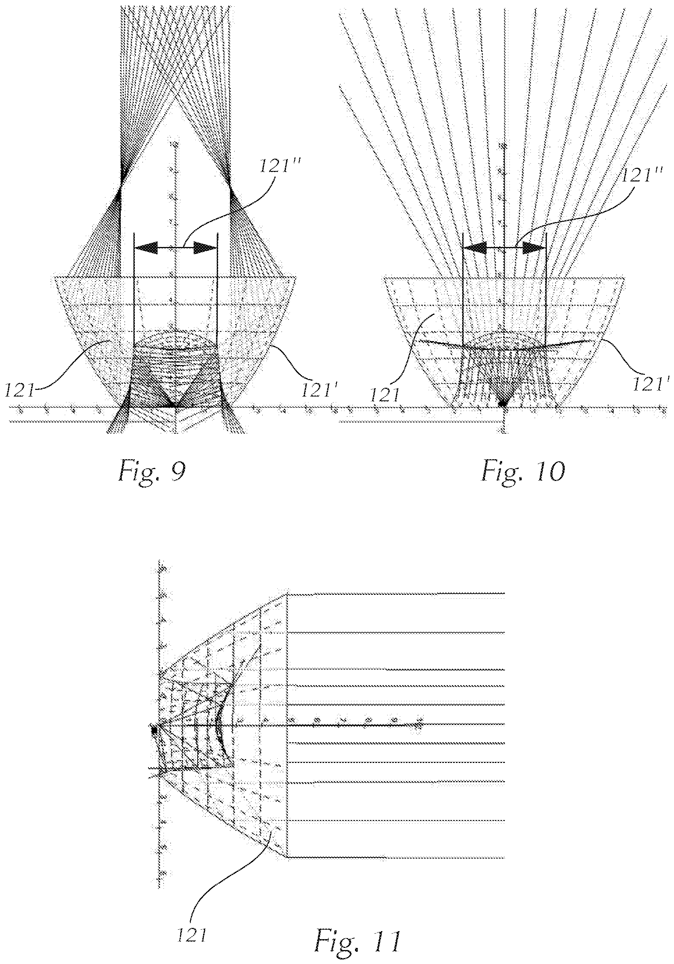

Figur 9 und Figur 10 zeigen jeweils einen Horizontalschnitt durch ein idealisiertes TIR-Optikelement 121, welches der Lichtquelle 21 der zweiten Gruppe 20 zugeordnet ist. Figur 9 zeigt dabei den Strahlenverlauf im Randbereich der TIR-Linse 121, während Figur 10 den Strahlenverlauf im Bereich des Zentrums der TIR-Linse 121 zeigt. Der gesamte Strahlenverlauf ergibt sich naturgemäß als Überlagerung dieser Darstellungen, ist der besseren Übersichtlichkeit halber aber nicht zeichnerisch dargestellt.

Im Bereich des Mantels 121' der TIR-Linse 121 ist diese als Kreuzstrahler ausgebildet, während sie in ihrem Zentrum 121" als Breitstrahler ausgebildet ist.

Figur 11 zeigt schließlich noch einen Vertikalschnitt durch die TIR-Linse 121. Wie der Figur 11 zu entnehmen ist, weist die TIR-Linse 121 in Hinblick auf die vertikales Richtung Lichtstrahlen ein im Wesentlichen paralleles Abstrahlverhalten auf.

Die Figuren 5 - 11 zeigen das Abstrahlverhalten der TIR-Linsen in einer idealisierten Darstellung, d.h. in Einzelstellung, ohne die benachbarten Linsen in dem optischen Bauteil 200.

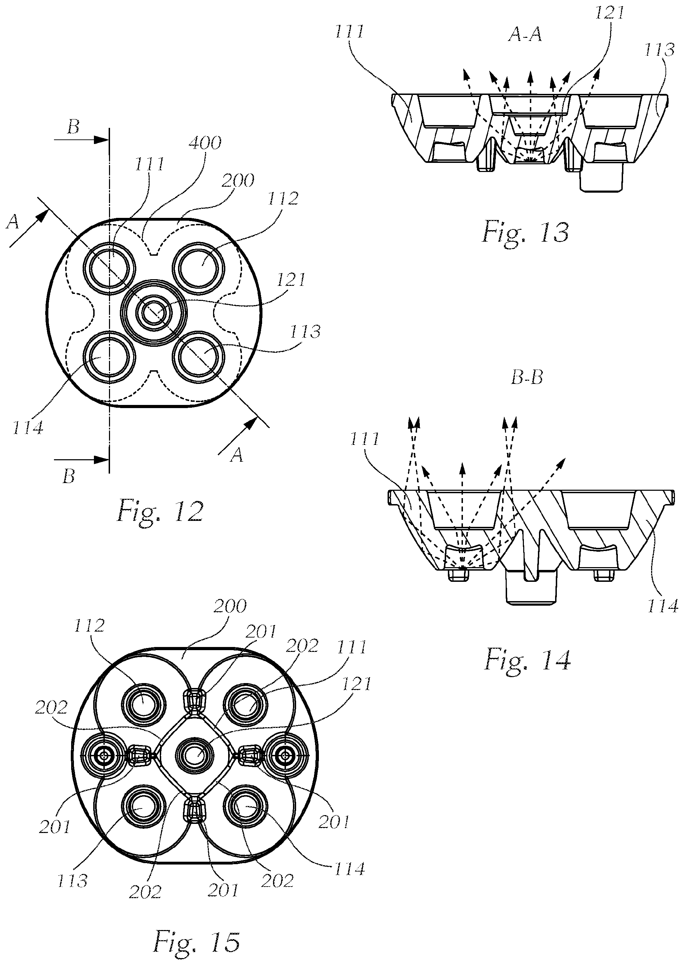

Figur 12 zeigt die Vorderseite, d.h. die Lichtaustrittsseite des optischen Bauteils 200 mit den TIR-Linsen 111, 112, 113, 114, 121.

Figur 13 zeigt einen Schnitt entlang der Linie A-A in Figur 12.

Figur 14 zeigt einen Schnitt entlang der Linie B-B in Figur 12.

Wie man den Schnitten in Figur 13 und 14 gut entnehmen kann, sind - abgesehen von der Tatsache, dass die einzelnen TIR-Linsen in ihrem Zentrum eine Vertiefung aufweisen und ihre Lichtaustrittsflächen somit nicht in einer einzigen Ebene liegen - in der gezeigten Darstellung die einzelnen TIR-Linsen nicht als voneinander getrennte Einzellinsen ausgebildet, sondern bilden miteinander den einstückigen optischen Bauteil 200 (Sammeloptik 200).

Bei der gezeigten Ausführungsform gehen die einzelnen TIR-Linsen außerdem in ihren Randbereichen in die jeweils benachbarten TIR-Linsen über. Wenn es die Randbedingungen, z.B. das Design erlauben, kann allerdings entgegen der Darstellung mit Vorteil auch vorgesehen, dass die einzelnen TIR-Linsen nicht ineinander übergehen.

Bei der gezeigten Ausführungsform, bei welcher die TIR-Linsen ineinander übergehen, verliert in diesen Übergangsbereichen, z.B. in den Übergangsbereichen zwischen den TIR-Linsen 111 - 121 und 121 - 113 in Figur 13 oder den TIR-Linsen 111 - 114 in Figur 14 (dies gilt natürlich auch für alle anderen, nicht gezeigten Übergangsbereiche) der Mantel der "jeweiligen" TIR-Linse seine totalreflektierenden Eigenschaften, sodass Licht von einer TIR-Linse in eine benachbarte TIR-Linse eintreten und aus der Lichtaustrittsfläche der benachbarten TIR-Linse austritt.

Figur 15 zeigt noch das optische Bauteil 200 in einer Rückansicht mit schematisch eingezeichneten Übergangsbereichen 201 jeweils zwischen den einzelnen TIR-Linsen 111-112, 111 - 114, 112 -113 und 113 -114 und Übergangsbereichen 202 zwischen der zentralen TIR-Linse 121 und den vier äußeren TIR-Linsen 111,112,113,114.

Noch einmal auf Figur 12 zurückkommend zeigt der Bereich 400 des Bauteils 200 schematisch jenen Bereich, der in etwa leuchtet, wenn der Blinker betätigt ist, wobei auch der Bereich der TIR-Linse 121, das ist der Bereich des (ausgeschalteten) Tagfahrlichtes - allerdings schwächer als der umgebende Bereich, da hier weniger Licht von den TIR-Linsen 111, 112, 113, 114 austritt - leuchtet. Durch die Streuoptik 50 wird das Licht aber ohnehin weiters aufgestreut, sodass diese Unterschiede visuell nicht auffallen.

Die äußersten Bereiche des Bauteils 200 außerhalb des Bereiches 400 sind in der Praxis nicht oder nur geringfügig erhellt, was aber vernachlässigbar ist.

Wenn der Blinker ausgeschaltet ist und nur das Tagfahrlicht leuchtet, wird überwiegend der zentrale Bereich 121 erleuchtet sein, geringfügig kann Licht auch aus den Blinkerlinsen (TIR-Linsen 111, 112, 113, 114) austreten.

## Patentansprüche

1. Leuchteinheit (1) für einen Scheinwerfer (100), insbesondere für einen Scheinwerfer für ein Kraftfahrzeug, wobei die Leuchteinheit zumindest umfasst:
*) eine erste Lichtquellen-Gruppe (10), welche erste Lichtquellen-Gruppe (10) zumindest eine Lichtquelle (11, 12, 13, 14) umfasst,
*) eine zweite Lichtquellen-Gruppe (20), welche zweite Lichtquellen-Gruppe (20) zumindest eine, vorzugsweise genau eine, Lichtquelle (21) umfasst,
wobei die erste Lichtquellen-Gruppe (10) zur Erzeugung einer ersten Lichtfunktion eingerichtet ist,
und wobei die zweite Lichtquellen-Gruppe (20) zur Erzeugung einer, von der ersten Lichtfunktion verschiedenen, zweiten Lichtfunktion eingerichtet ist,
und wobei jede Lichtquelle (11, 12, 13, 14) der ersten Lichtquellen-Gruppe (10) Licht in ein der jeweiligen Lichtquelle (11, 12, 13, 14) zugeordnetes Optikelement (111, 112, 113, 114) einkoppelt,
und wobei jede Lichtquelle (21) der zweiten Lichtquellen-Gruppe (20) Licht in ein der jeweiligen Lichtquelle (21) zugeordnetes Optikelement (121) einkoppelt,
und wobei den Optikelementen (111, 112, 113, 114, 121) eine Sekundäroptik, insbesondere in Form einer Streuoptik (50) nachgeschaltet ist, durch welche Sekundäroptik (50) das aus den Optikelementen (111, 112, 113, 114, 121) austretende Licht durchtritt und in einen Bereich vor der Leuchteinheit (1) abgestrahlt wird, und wobei
die zumindest zwei Gruppen (10, 20) von Lichtquellen (11, 12, 13, 14, 21) getrennt ansteuerbar sind, und wobei
die erste Lichtquellen-Gruppe (10) zur Erzeugung einer Blinklicht-Funktion ausgebildet ist, und
die zweite Lichtquellen-Gruppe (20) zur Erzeugung einer Tagfahrlichtfunktion, einer Positionslichtfunktion oder einer kombinierten Tagfahrlichtfunktion-Positionslichtfunktion eingerichtet ist, **dadurch gekennzeichnet, dass** das eine oder die mehreren Optikelemente (111, 112, 113, 114) der ersten Gruppe (10) in Hinblick auf ihr horizontales und/oder vertikales, insbesondere in Hinblick auf ihr horizontales und vertikales, Abstrahlverhalten im Bereich eines Mantels des Optikelementes (111, 112, 113, 114) als kombinierte Breit- und Kreuzstrahler ausgebildet sind, und dass das eine oder die mehreren Optikelemente (121) der zweiten Gruppe (20) in Hinblick auf ihr horizontales Abstrahlverhalten im Bereich eines Mantels des Optikelementes (121) als Kreuzstrahler ausgebildet sind.

2. Leuchteinheit nach Anspruch 1, **dadurch gekennzeichnet, dass** die einzelnen Lichtquellen (11, 12, 13, 14, 21) einer Gruppe (10, 20) getrennt voneinander ansteuerbar sind.

3. Leuchteinheit nach Anspruch 1 oder 2, **dadurch gekennzeichnet dass** die Optikelemente (111, 112, 113, 114, 121) als TIR-Linsen ausgebildet sind.

4. Leuchteinheit nach einem der Ansprüche 1 bis 3, **dadurch gekennzeichnet, dass** die den Lichtquellen (11, 12, 13, 14, 21) zugeordneten Optikelemente (111, 112, 113, 114, 121) als Licht sammelnde Optiken ausgebildet sind.

5. Leuchteinheit nach einem der Ansprüche 1 bis 4, **dadurch gekennzeichnet, dass** die den Lichtquellen (11, 12, 13, 14, 21) zugeordneten Optikelemente (111, 112, 113, 114, 121) in einem gemeinsamen optischen Bauteil (200) ausgebildet sind.

6. Leuchteinheit nach einem der Ansprüche 1 bis 5, **dadurch gekennzeichnet, dass** die zumindest eine Lichtquelle (11, 12, 13, 14) der ersten Lichtquellen-Gruppe (10) und die zumindest eine Lichtquelle (21) der zweiten Lichtquellen-Gruppe (20) auf einem gemeinsamen Träger (30) angeordnet sind, wobei vorzugsweise die zumindest eine Lichtquelle (11, 12, 13, 14) der ersten Lichtquellen-Gruppe (10) und die zumindest eine Lichtquelle (21) auf einer ebenen Fläche des gemeinsamen Trägers (30) angeordnet sind.

7. Leuchteinheit nach einem der Ansprüche 1 bis 6, **dadurch gekennzeichnet, dass** die erste Lichtquellen-Gruppe (10) zwei oder mehr Lichtquellen (11, 12, 13, 14) umfasst, wobei vorzugsweise die erste Lichtquellen-Gruppe (10) genau vier Lichtquellen (11, 12, 13, 14) umfasst.

8. Leuchteinheit nach einem der Ansprüche 1 bis 7, **dadurch gekennzeichnet, dass** die Lichtquellen (11, 12, 13, 14) der ersten Lichtquellen-Gruppe (10) um die zumindest eine, vorzugsweise genau eine Lichtquelle (21) der zweiten Lichtquellen-Gruppe (20) herum angeordnet sind, wobei vorzugsweise die zumindest eine, vorzugsweise genau eine Lichtquelle (21) der zweiten Lichtquellen-Gruppe (20) im Zentrum der zwei oder mehreren Lichtquellen (11, 12, 13, 14) der ersten Lichtquellen-Gruppe (10) angeordnet ist/sind.

9. Leuchteinheit nach einem der Ansprüche 7 oder 8, **dadurch gekennzeichnet, dass** die vier Lichtquellen (11, 12, 13, 14) an den Ecken eines gedachten Rechtecks oder Quadrats angeordnet sind.

10. Leuchteinheit nach einem der Ansprüche 1 bis 9, **dadurch gekennzeichnet, dass** das eine oder die mehreren Optikelemente (111, 112, 113, 114) der ersten Gruppe (10) in Hinblick auf ihr horizontales und/oder vertikales Abstrahlverhalten im Zentrum des Optikelementes (111, 112, 113, 114) als Breitstrahler ausgebildet sind.

11. Leuchteinheit nach einem der Ansprüche 7 bis 10, **dadurch gekennzeichnet, dass** die zwei oder mehr Optikelemente (111, 112, 113, 114) der ersten Gruppe (10) in Hinblick auf ihr Abstrahlverhalten identisch ausgebildet sind.

12. Leuchteinheit nach einem der Ansprüche 1 bis 11, **dadurch gekennzeichnet, dass** das eine oder die mehreren Optikelemente (121) der zweiten Gruppe (20) in Hinblick auf ihr horizontales Abstrahlverhalten im Zentrum des Optikelementes (121) als Breitstrahler ausgebildet sind.

13. Leuchteinheit nach einem der Ansprüche 1 bis 12, **dadurch gekennzeichnet, dass** das eine oder die mehreren Optikelemente (121) der zweiten Gruppe (20) in Hinblick auf ihr vertikales Abstrahlverhalten Lichtstrahlen im Wesentlichen parallel abstrahlen.

14. Leuchteinheit nach einem der Ansprüche 1 bis 13, **dadurch gekennzeichnet, dass** die Lichtquellen (111, 112, 113, 114, 121) LED-Lichtquellen sind, wobei jede LED-Lichtquelle (111, 112, 113, 114, 121) zumindest eine Leuchtdiode umfasst, wobei vorzugsweise jede LED-Lichtquelle (111, 112, 113, 114, 121) getrennt ansteuerbar und ein- bzw. ausschaltbar und/oder dimmbar ist, wobei vorzugsweise jede Leuchtdiode einer LED-Lichtquelle getrennt ansteuerbar und ein- bzw. ausschaltbar und/oder dimmbar ist.

15. Leuchteinheit nach einem der Ansprüche 5 bis 14, **dadurch gekennzeichnet, dass** benachbarte Optikelemente (111, 112, 113, 114, 121) in Übergangsbereichen (201, 202) Bereichen ineinander übergehen.

16. Fahrzeugscheinwerfer mit einer oder mehreren Leuchteinheiten nach einem der Ansprüche 1 bis 15, vorzugsweise **gekennzeichnet durch** vier Leuchteinheiten nach einem der Ansprüche 1 bis 15, insbesondere **dadurch gekennzeichnet, dass** die vier Leuchteinheiten (1) an den Ecken eines gedachten Rechteckes oder Quadrates angeordnet sind.

17. Fahrzeugscheinwerfer nach Anspruch 16, **dadurch gekennzeichnet, dass** alle Leuchteinheiten (1) einen im Wesentlichen identischen Aufbau aufweisen.

## Claims

1. A lighting unit (1) for a headlight (100), in particular for a headlight for a motor vehicle, wherein the lighting unit at least comprises:
*) a first light source group (10), which first light source group (10) comprises at least one light source (11,12,13,14),
*) a second light source group (20), which second light source group (20) comprises at least one, preferably exactly one, light source (21),
wherein the first light source group (10) is configured to generate a first light function,
and wherein the second light source group (20) is configured to generate a second light function, which is different from the first light function,
and wherein each light source (11, 12, 13, 14) of the first light source group (10) couples light into an optics element (111, 112, 113, 114) associated with the respective light source (11, 12, 13,14),
and wherein each light source (21) of the second light source group (20) couples light into an optics element (121) associated with the respective light source (21),
and wherein a secondary optics, in particular in the form of a diffusing optics (50), is arranged downstream of the optics elements (111, 112, 113, 114, 121), through which secondary optics (50) the light exiting from the optics elements (111, 112, 113, 114, 121) passes and is irradiated into a region in front of the lighting unit (1), and wherein
the least two groups (10, 20) of light sources (11, 12, 13, 14, 21) can be controlled separately, and wherein the first light source group (10) is configured to generate a flashing light function, and
the second light source group (20) is configured to generate a daytime running light function, a position light function, or a combined daytime running light function-position light function, **characterised in that**
the one or more optics elements (111,112,113,114) of the first light source group (10), in terms of its/ their horizontal and/ or vertical, in particular in terms of its/ their horizontal and vertical irradiation behaviour in the region of a casing of the optics element (111, 112, 113, 114), is/are formed as combined wide and criss-cross emitters, and that
the one or more optics elements (121) of the second light source group (20), in terms of its/their horizontal irradiation behaviour in the region of a casing of the optics element (121), is/are formed as criss-cross emitters.

2. The lighting unit according to Claim 1, **characterised in that** the individual light sources (11,12,13,14,21) within a light source group (10,20) can be controlled separately from one another.

3. The lighting unit according to Claim 1 or 2, **characterised in that** the optics elements (111, 112, 113, 114, 121) are formed as TIR lenses.

4. The lighting unit according to one of Claims 1 to 3, **characterised in that** the optics elements (111, 112,113,114,121) associated with the light sources (11,12,13,14,21) are formed as light-collecting optics.

5. The lighting unit according to one of Claims 1 to 4, **characterised in that** the optics elements (111, 112,113,114,121) associated with the light sources (11,12,13,14,21) are formed in a common optical component (200).

6. The lighting unit according to one of Claims 1 to 5, **characterised in that** the at least one light source (11, 12, 13, 14) of the first light source group (10) and the at least one light source (21) of the second light source group (20) are arranged on a common support (30), wherein preferably the at least one light source (11, 12, 13, 14) of the first light source group (10) and the at least one light source (21) are arranged on a flat area of the common support (30).

7. The lighting unit according to one of Claims 1 to 6, **characterised in that** the first light source group (10) comprises two or more light sources (11, 12, 13, 14), wherein preferably the first light source group (10) comprises exactly four light sources (11,12,13,14).

8. The lighting unit according to one of Claims 1 to 7, **characterised in that** the light sources (11,12,13,14) of the first light source group (10) are arranged around the at least one, preferably exactly one light source (21) of the second light source group (20), wherein preferably the at least one, preferably exactly one light source (21) of the second light source group (20) is/are arranged in the centre of the two or more light sources (11, 12, 13, 14) of the first light source group (10).

9. The lighting unit according to one of Claims 7 to 8, **characterised in that** the four light sources (11,12,13,14) are arranged at the corners of a virtual rectangle or square.

10. The lighting unit according to one of Claims 1 to 9, **characterised in that** the one or more optics elements (111, 112,113,114) of the first light source group (10), in terms of its/ their horizontal and/or vertical irradiation behaviour in the centre of the optical element (111, 112, 113,114), is/are formed as wide emitters.

11. The lighting unit according to one of Claims 7 to 10, **characterised in that** the two or more optics elements (111, 112, 113, 114) of the first light source group (10) are formed identically in terms of their irradiation behaviour.

12. The lighting unit according to one of Claims 1 to 11, **characterised in that** the one or more optics elements (121) of the second light source group (20), in terms of its/their horizontal irradiation behaviour in the centre of the optics element (121), is/are formed as wide emitters.

13. The lighting unit according to one of Claims 1 to 12, **characterised in that** the one or more optics elements (121) of the second light source group (20), in terms of its/their vertical irradiation behaviour, irradiates/irradiate light beams substantially in parallel.

14. The lighting unit according to one of Claims 1 to 13, **characterised in that** the light sources (111, 112,113,114,121) are LED light sources, wherein each LED light source (111, 112, 113, 114, 121) comprises at least one light-emitting diode, wherein preferably each LED light source (111, 112, 113, 114, 121) can be controlled and can be switched on and off and/or can be dimmed separately, wherein preferably each light-emitting diode of an LED light source can be controlled and can be switched on and off and/or can be dimmed separately.

15. The lighting unit according to one of Claims 5 to 14, **characterised in that** adjacent optics elements (111, 112, 113, 114, 121) transition into one another in transition regions (201, 202).

16. A vehicle headlight comprising one or more lighting units according to one of Claims 1 to 15, preferably **characterised by** four lighting units according to one of Claims 1 to 15, in particular **characterised in that** the four lighting units (1) are arranged at the corners of a virtual rectangle or square.

17. The vehicle headlight according to Claim 16, **characterised in that** all lighting units (1) have a substantially identical structure.

## Revendications

1. Unité d'éclairage (1) pour un phare (100), en particulier pour un phare pour un véhicule automobile, l'unité d'éclairage comportant au moins :
*) un premier groupe de sources de lumière (10), lequel premier groupe de sources de lumière (10) comporte au moins une source de lumière (11, 12, 13, 14) ;
*) un second groupe de sources de lumière (20), lequel second groupe de sources de lumière (20) comporte au moins une, de préférence exactement une, source de lumière (21) ;
suivant laquelle le premier groupe de sources de lumière (10) est configuré pour générer une première fonction lumineuse ;
et suivant laquelle le second groupe de sources de lumière (20) est configuré pour générer une seconde fonction lumineuse, différente de la première fonction lumineuse ;
et suivant laquelle chaque source de lumière (11, 12, 13, 14) du premier groupe de sources de lumière (10) injecte de la lumière dans un élément d'optique (111, 112, 113, 114) associé à la source de lumière respective (11, 12, 13, 14) ;
et suivant laquelle chaque source de lumière (21) du second groupe de sources de lumière (20) injecte de la lumière dans un élément d'optique (121) associé à la source de lumière respective (21) ;
et suivant laquelle une optique secondaire, en particulier sous la forme d'une optique dispersive (50), est disposée en aval des éléments d'optique (111, 112, 113, 114, 121), à travers laquelle optique secondaire (50) la lumière sortant des éléments d'optique (111, 112, 113, 114, 121) passe et est irradiée dans une région devant l'unité d'éclairage (1) ; et suivant laquelle
les au moins deux groupes (10, 20) de sources de lumière (11, 12, 13, 14, 21) sont aptes à être commandés séparément ; et suivant laquelle
le premier groupe de sources de lumière (10) est formé pour générer une fonction de feu clignotant ; et
le second groupe de sources de lumière (20) est configuré pour générer une fonction de feu diurne, une fonction de feu de position ou une fonction combinée de feu diurne - feu de position,
**caractérisée par le fait que**
le ou les éléments d'optique (111, 112, 113, 114) du premier groupe (10) en ce qui concerne leur comportement d'irradiation horizontal et/ou vertical, en particulier en ce qui concerne leur comportement d'irradiation horizontal et vertical dans la région d'une enveloppe de l'élément d'optique (111, 112, 113, 114) sont formés en tant qu'émetteurs combinés de réfraction à l'opposé de l'axe optique et de réfraction vers l'axe optique, et **par le fait que**
le ou les éléments d'optique (121) du second groupe (20) en ce qui concerne leur comportement d'irradiation horizontal dans la région d'une enveloppe de l'élément d'optique (121) sont formés en tant qu'émetteurs de réfraction vers l'axe optique.

2. Unité d'éclairage selon la revendication 1, **caractérisée par le fait que** les sources de lumière individuelles (11, 12, 13, 14, 21) d'un groupe (10, 20) sont aptes à être commandées indépendamment les unes des autres.

3. Unité d'éclairage selon l'une des revendications 1 ou 2, **caractérisée par le fait que** les éléments d'optique (111, 112, 113, 114) sont formés en tant que lentilles à réflexion totale interne (TIR).

4. Unité d'éclairage selon l'une des revendications 1 à 3, **caractérisée par le fait que** les éléments d'optique (111, 112, 113, 114, 121) associés aux sources de lumière (11, 12, 13, 14, 21) sont formés en tant qu'optiques de collecte de lumière.

5. Unité d'éclairage selon l'une des revendications 1 à 4, **caractérisée par le fait que** les éléments d'optique (111, 112, 113, 114, 121) associés aux sources de lumière (11, 12, 13, 14, 21) sont formés dans un composant optique commun (200).

6. Unité d'éclairage selon l'une des revendications 1 à 5, **caractérisée par le fait que** la au moins une source de lumière (11, 12, 13, 14) du premier groupe de sources de lumière (10) et la au moins une source de lumière (21) du second groupe de sources de lumière (20) sont disposées sur un support commun (30), où, de préférence, la au moins une source de lumière (11, 12, 13, 14) du premier groupe de sources de lumière (10) et la au moins une source de lumière (21) sont disposées sur une face plane du support commun (30).

7. Unité d'éclairage selon l'une des revendications 1 à 6, **caractérisée par le fait que** le premier groupe de sources de lumière (10) comporte au moins deux sources de lumière (11, 12, 13, 14), où, de préférence, le premier groupe de sources de lumière (10) comporte exactement quatre sources de lumière (11, 12, 13, 14).

8. Unité d'éclairage selon l'une des revendications 1 à 7, **caractérisée par le fait que** les sources de lumière (11, 12, 13, 14) du premier groupe de sources de lumière (10) sont disposées autour de la au moins une, de préférence exactement une source de lumière (21) du second groupe de sources de lumière (20), où, de préférence, la au moins une, de préférence exactement une source de lumière (21) du second groupe de sources de lumière (20) est/sont disposées au centre des au moins deux sources de lumière (11, 12, 13, 14), du premier groupe de sources de lumière (10).

9. Unité d'éclairage selon l'une des revendications 7 ou 8, **caractérisée par le fait que** les quatre sources de lumière (11, 12, 13, 14) sont disposées aux angles d'un rectangle ou carré virtuel.

10. Unité d'éclairage selon l'une des revendications 1 à 9, **caractérisée par le fait que** le ou les éléments d'optique (11, 112, 113, 114) du premier groupe (10) en ce qui concerne leur comportement d'irradiation horizontal et/ou vertical au centre de l'élément d'optique (111, 112, 113, 114) sont formés en tant qu'émetteurs de réfraction à l'opposé de l'axe optique.

11. Unité d'éclairage selon l'une des revendications 7 à 10, **caractérisée par le fait que** les au moins deux éléments d'optique (111, 112, 113, 114) du premier groupe (10) sont formés identiques en ce qui concerne leur comportement d'irradiation.

12. Unité d'éclairage selon l'une des revendications 1 à 11, **caractérisée par le fait que** le ou les éléments d'optique (121) du second groupe (20) en ce qui concerne leur comportement d'irradiation horizontal au centre de l'élément d'optique (121) sont formés en tant qu'émetteurs de réfraction à l'opposé de l'axe optique.

13. Unité d'éclairage selon l'une des revendications 1 à 12, **caractérisée par le fait que** le ou les éléments d'optique (121) du second groupe (20) en ce qui concerne leur comportement d'irradiation vertical irradient des faisceaux lumineux sensiblement parallèlement.

14. Unité d'éclairage selon l'une des revendications 1 à 13, **caractérisée par le fait que** les sources de lumière (111, 112, 113, 114, 121) sont des sources de lumière à diode électroluminescente (DEL), où chaque source de lumière à DEL (111, 112, 113, 114, 121) comporte au moins une diode électroluminescente, où, de préférence, chaque source de lumière à DEL (111, 112, 113, 114, 121) est apte à être commandée et apte à être mise sous tension ou hors tension et/ou apte à être mise en veilleuse de façon séparée, où, de préférence, chaque diode électroluminescente d'une source de lumière à DEL est apte à être commandée et apte à être mise sous tension ou hors tension et/ou apte à être mise en veilleuse de façon séparée.

15. Unité d'éclairage selon l'une des revendications 5 à 14, **caractérisée par le fait que** des éléments d'optique adjacents (111, 112, 113, 114, 121) se fondent l'un dans l'autre dans des régions de transition (201, 202).

16. Phare de véhicule ayant une ou plusieurs unités d'éclairage selon l'une des revendications 1 à 15, de préférence **caractérisé par** quatre unités d'éclairage selon l'une des revendications 1 à 15, en particulier **caractérisé par le fait que** les quatre unités d'éclairage (1) sont disposées aux angles d'un rectangle ou carré virtuel.

17. Phare de véhicule selon la revendication 16, **caractérisé par le fait que** toutes les unités d'éclairage (1) présentent une structure sensiblement identique.
